# DEMANDE DE BREVET EUROPEEN

(11) **EP 2 345 356 A1**
(43) Date de publication de la demande: **20.07.2011**
(21) Numéro de dépôt: 11150567.3
(22) Date de dépôt: 11.01.2011
(51) Int. Cl.: A47J 37/07

(54) **Barbecue de sécurité à charbon de bois pour la restauration collective**

(30) Priorité: 13.01.2010 FR 1050193
(71) Demandeur: Inter Cuisines, 94000 Vitry sur Seine (FR)
(72) Inventeur: Ma, Li, 94400, VITRY SUR SEINE (FR); Ma, Weile, 11560, Saint Pierre la Mer (FR)
(74) Mandataire: Kohn, Philippe

(57) **Abrégé**

L'invention propose un barbecue (10) comportant un bac de chauffage (18), une hotte aspirante (30), un caisson inférieur (42) relié à la hotte (30), et un tuyau externe d'évacuation relié au caisson inférieur (42), **caractérisé en ce qu'**il comporte un bac inférieur (72) à eau et un conduit interne (62) d'évacuation qui est relié à la face supérieure ouverte du caisson inférieur et dont l'extrémité inférieure (63) débouche au-dessus et en regard de la surface de l'eau contenue dans le bac inférieur (72) de manière à guider le flux des rejets de cuisson en direction de la surface de l'eau.

## Description

### DOMAINE TECHNIQUE DE L'INVENTION

La présente invention concerne un barbecue, aussi appelé grill, pour la restauration collective et dont la source de chaleur est notamment le charbon de bois.

L'invention concerne notamment un barbecue à charbon de bois pour réaliser des brochettes japonaises, aussi appelées "Yakitori".

### ETAT DE LA TECHNIQUE

Lorsque la source de chaleur, ou foyer, d'un tel appareil de cuisson pour la restauration collective est du charbon de bois ou un combustible équivalent tel que du charbon ou du bois qui, au cours de son utilisation et sa combustion, est susceptible de produire des rejets sous forme de particules incandescentes, aussi appelées braises ou escarbilles, il existe des risques très importants d'incendie dans les conduits et tuyaux d'évacuation des effluents et rejets de combustion tels que les fumées.

En effet, lorsqu'un tel appareil est utilisé en restauration collective, il est obligatoirement équipé d'une hotte aspirante qui, parmi les autres effluents et rejets de cuisson, aspire les particules incandescentes en les introduisant très rapidement, et encore chaudes, dans les différents conduits dans lesquels elles provoquent régulièrement des incendies sous forme de « feux de cheminée ».

L'invention concerne ainsi un barbecue, notamment à charbon de bois, pour la restauration collective comportant :
- un bac de chauffage formant foyer présentant une face supérieure ouverte vers le haut et qui loge du charbon de bois ;
- une grille horizontale de cuisson qui recouvre au moins en partie la face supérieure ouverte du bac de chauffage;
- une hotte supérieure d'aspiration des rejets de cuisson qui est une boîte agencée au-dessus du plan de la grille de cuisson;
- un caisson inférieur agencé en dessous de la hotte, qui s'étend verticalement vers le bas et dont la face supérieure est ouverte et est reliée à la face inférieure ouverte de la hotte;
- et un tuyau externe d'évacuation dont une extrémité inférieure est reliée à une ouverture latérale formée dans une paroi latérale du caisson inférieur.

Dans un tel barbecue, le rôle du caisson inférieur est de permettre d'évacuer les fumées provoquées lors de la cuisson.

Mais, durant le fonctionnement et l'utilisation du barbecue, le caisson aspire simultanément des petites braises et des escarbilles incandescentes qui, après être passées par la hotte d'aspiration, sont transférées dans le tuyau d'évacuation, puis dans les autres conduits d'évacuation qui équipent le restaurant, jusqu'à la cheminée extérieure finale.

Le tuyau d'évacuation et les autres conduits en aval sont de plus généralement tapissés intérieurement de dépôts combustibles, tels notamment que les graisses de friture.

Si l'entretien des tuyaux et conduits d'évacuation n'est pas suffisant, l'accumulation des dépôts et graisses peut provoquer une prise de feu et un incendie du fait des escarbilles et braises aspirées dans ces tuyaux et conduits.

De tels feux et incendies sont très dangereux, notamment du fait qu'ils peuvent se déclencher bien après la fin d'utilisation du barbecue, c'est-à-dire après l'extinction du foyer constitué le plus généralement par du charbon de bois, voire la nuit après la fermeture du restaurant.

L'invention a pour but de proposer un barbecue du type mentionné précédemment qui soit un barbecue de sécurité permettant d'éviter les risques d'incendies mentionnés ci-dessus.

### BREF RESUME DE L'INVENTION

Dans ce but l'invention propose un barbecue du type mentionné précédemment **caractérisé en ce qu**'il comporte :
- un bac inférieur à eau rempli d'eau qui est agencé en partie basse du caisson inférieur et dont la face supérieure est ouverte;
- et un conduit interne d'évacuation qui est relié au caisson inférieur et dont l'extrémité inférieure débouche au-dessus et en regard de la surface de l'eau contenue dans le bac inférieur, de manière à guider le flux des rejets de cuisson en direction de la surface de l'eau.

Grâce à la présence du bac à eau en partie basse du caisson inférieur et au conduit interne d'évacuation, le flux d'air contenant les différents rejets de cuisson, et notamment les braises et escarbilles incandescentes vient impacter la surface de l'eau, ce qui provoque une chute et une extinction immédiate de la quasi totalité des braises et escarbilles incandescentes.

Selon d'autres caractéristiques de l'invention:
- la hotte supérieure est une boîte agencée au-dessus du plan de la grille de cuisson et en arrière du bord longitudinal arrière supérieur du bac de chauffage, qui comporte une face verticale avant ouverte d'entrée pour l'aspiration des rejets de cuisson et une face inférieure de sortie ouverte vers le bas pour la récupération des rejets aspirés, la face supérieure ouverte du caisson inférieur est reliée à la face inférieure ouverte de la hotte, et le un conduit interne d'évacuation est relié à la face supérieure ouverte du caisson inférieur;
- le conduit interne est un conduit vertical cylindrique dont l'embouchure supérieure est reliée à la face supérieure ouverte du caisson par un raccord continu, de manière à faire passer la totalité du flux des rejets de cuisson par le conduit interne d'évacuation ;
- le barbecue comporte une cheminée interne qui entoure le bac à eau, qui s'étend depuis le fond du caisson inférieur, qui entoure le conduit interne sur une partie de sa hauteur et qui délimite avec ce dernier un canal annulaire de passage de section réduite, qui débouche vers le haut dans le caisson inférieur pour l'évacuation du flux des rejets de cuisson après leur passage à la surface de l'eau ;
- le barbecue comporte un dispositif d'aspiration à circulation d'air forcée qui est relié à l'ouverture latérale formée dans une paroi latérale du caisson;
- le dispositif d'aspiration comporte une boîte latérale externe d'aspiration qui est fixée sur la paroi latérale du caisson inférieur, dont un orifice d'entrée est relié à l'ouverture latérale et dont un orifice haut de sortie est relié à l'extrémité inférieure du tuyau d'évacuation;
- le bac à eau est réalisé sous la forme d'un tiroir extractible horizontalement hors du caisson inférieur;
- le barbecue comporte un filtre à choc qui est agencé dans la hotte supérieure et qui est incliné de bas en haut et d'avant en arrière;
- le barbecue comporte au moins un premier filtre à graisses qui est agencé en aval de la sortie du canal de passage et en amont de l'orifice d'entrée de la boîte latérale d'aspiration.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective de trois-quarts avant gauche d'un exemple de réalisation d'un barbecue de sécurité selon l'invention ;
- la figure 2 est une vue en perspective éclatée des principaux composants du barbecue de la figure 1 ;
- la figure 3 est une vue en perspective, de trois-quarts avant droit et en section par un plan vertical et transversal du barbecue illustré à la figure 1 ;

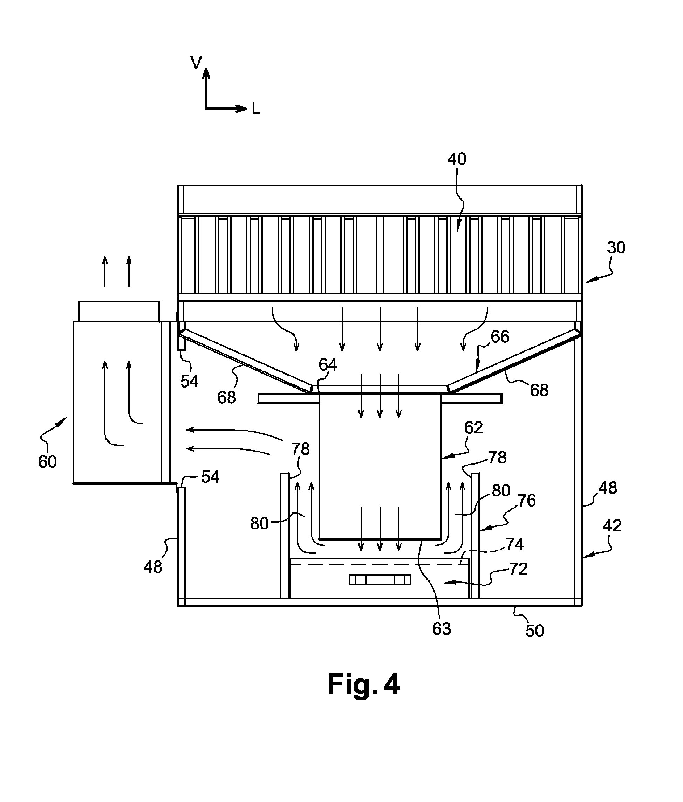

- la figure 4 est une vue de face, en position assemblée, des principaux composants illustrés à la figure 2.

Dans la description qui va suivre, des composants identiques, analogues, ou similaires seront désignés par les mêmes chiffres de référence.

Pour faciliter la compréhension de la description et des revendications, on utilisera à titre non limitatif, en référence à la gravité terrestre et au trièdre L, V, T indiqué sur les figures, les termes longitudinal, vertical, transversal, horizontal, etc.

On utilisera aussi les orientations gauche et droite en référence aux figures, ainsi que les termes avant et arrière selon l'orientation de l'axe transversal T.

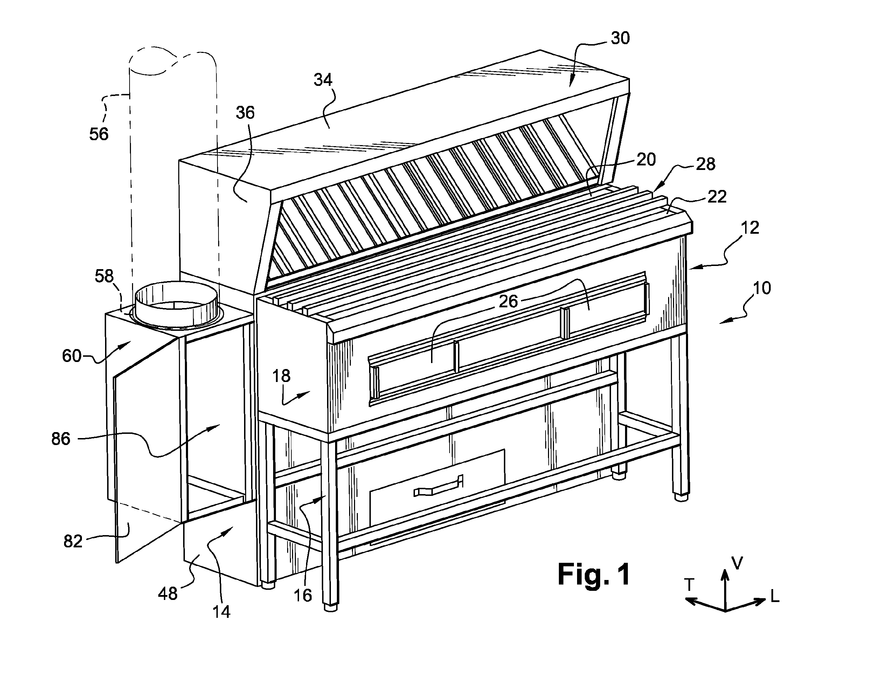

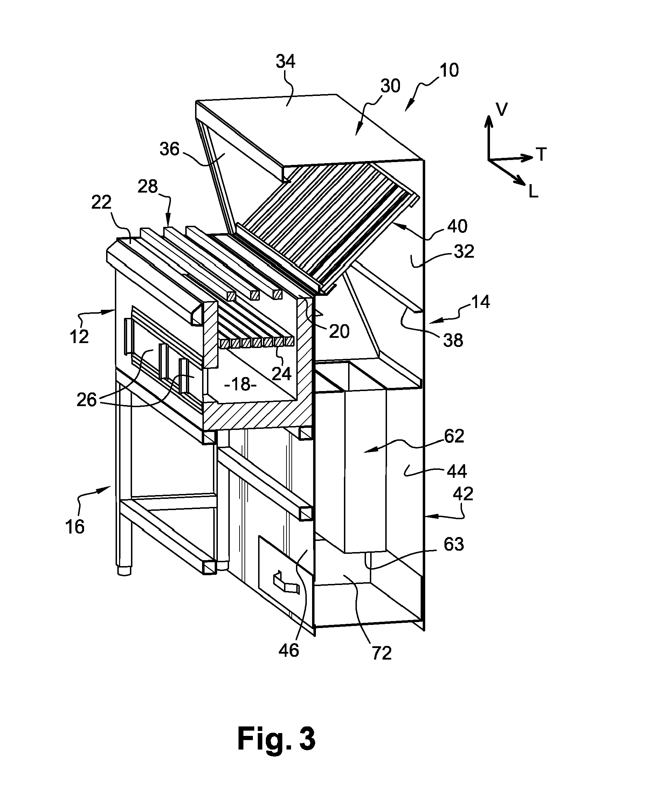

Le barbecue 10 illustré notamment aux figures 1 et 3 est essentiellement constitué par une partie avant de cuisson 12, de conception générale connue, et d'une partie arrière 14 d'aspiration et d'évacuation des rejets et effluents de cuisson.

La partie avant 12 est constituée, de manière connue, d'un châssis ou support inférieur 16 en tubes sur la face supérieure duquel repose le bac de chauffage 18 formant foyer de chauffe.

Le bac ou puits de chauffage 18 est de forme générale parallélépipédique rectangle qui s'étend selon sa plus grande longueur selon la direction longitudinale « L ». Le bac est fermé sur toutes ses faces à l'exception de sa face supérieure qui est ouverte vers le haut et qui est délimitée par un bord longitudinal arrière 20 et par un bord longitudinal avant 22.

Sensiblement à mi-hauteur, le bac de chauffage 18 est muni d'une grille horizontale intermédiaire 24 destinée à recevoir, sur sa face supérieure, le combustible incandescent tel que, de préférence, du charbon de bois.

La grille 24 permet aux cendres du combustible de tomber dans le fond du bac de chauffage, ou puits de cuisson, 18.

En face avant du bac de chauffage 18, il est prévu des volets coulissants et réglables 26 permettant d'accéder au cendrier constitué par le fond du bac 18 et qui constituent une prise d'air réglable qui permet de régler l'alimentation en air comburant, et donc le niveau de combustion par alimentation plus ou moins importante en oxygène.

En partie supérieure, la face ouverte du bac de chauffage 18 est recouverte, ici sur toute sa longueur, par une grille horizontale de cuisson 28 qui, ici à titre non limitatif, est constituée par une série de barreaux horizontaux longitudinaux.

Ainsi, dans le mode de réalisation illustré aux figures qui est plus particulièrement adapté à la cuisson de brochettes japonaises, le bac de chauffage 18 et la grille supérieure horizontale de cuisson s'étendent longitudinalement de manière à pouvoir supporter les brochettes orientées transversalement en appui sur la face supérieure des barreaux longitudinaux constituant la grille de cuisson 28.

Lors de la cuisson des brochettes, non représentées, il se produit des fumées de cuisson qui résultent de la chute de graisses et/ou d'autres composants des brochettes sur le foyer, et notamment sur le charbon de bois (non représenté) qui s'échappent verticalement à travers la grille, ainsi que la projection de braises et/ou d'escarbilles incandescentes qui tendent aussi à s'échapper hors du bac de cuisson 18 à travers la face supérieure ouverte du bac de chauffage.

En partie haute, et de manière connue, la partie arrière 14 du barbecue 10 est constituée par une hotte supérieure 30 d'aspiration des rejets de cuisson qui est agencée de manière à éviter que l'ensemble des rejets qui s'échappent verticalement par la face supérieure ouverte du bac de chauffage 18 ne s'échappent librement dans l'environnement, et notamment dans la cuisine du restaurant équipé du barbecue 10.

A cet effet, la hotte aspirante 30 se présente sous la forme d'une boîte parallélépipédique rectangle d'orientation principale horizontale qui est agencée verticalement au-dessus du plan de la face supérieure ouverte du bac de chauffage 18 et de la grille de cuisson 28, et transversalement en arrière du bord longitudinal arrière 20 supérieur du bac 18.

La hotte 30 est réalisée en tôle découpée et pliée et elle comporte essentiellement une paroi longitudinale et verticale arrière 32, une paroi longitudinale et horizontale supérieure 34, et deux parois verticales et transversales d'extrémité 36.

Ainsi, la hotte supérieure d'aspiration 30 comporte une face verticale avant ouverte permettant l'entrée du flux des effluents de cuisson dans la hotte 30 qui sont aspirés par cette face ouverte d'entrée, et une face inférieure horizontale de sortie ouverte vers le bas, qui est délimitée par le bord périphérique inférieur 38 de la hotte d'aspiration 30, pour la récupération des rejets aspirés.

De plus, de manière connue, un premier filtre 40 est agencé à l'intérieur de la hotte supérieure d'aspiration 30.

Ce filtre 40 est un filtre dit « à choc » qui s'étend à l'intérieur de la hotte 30 sur toute la longueur de cette dernière et qui est incliné d'avant en arrière et de bas en haut, comme illustré sur les figures.

Cette inclinaison vers l'arrière permet d'éviter que des projections de cuisson aspirées par la hotte 30 ne risquent de rebondir du filtre sur les aliments en cours de cuisson, et par exemple, sur les brochettes, afin d'éviter par exemple que les brochettes ne soient recouvertes de cendres de cuisson qui nuisent à l'aspect et au goût.

Le filtre à choc 40 est constitué d'un cadre et de profilés, ici d'orientation verticale, en acier inoxydable, ces profilés constituant des chicanes.

Le filtre 40 constitue ainsi un pare-flamme efficace et il assure aussi une première fonction de filtration des graisses et des gouttelettes résultant de l'extraction de la cuisson, en assurant une première fonction partielle de protection contre les risques d'incendies en évitant l'évacuation de trop de graisses et l'accumulation de ces dernières dans les différents conduits et tuyaux en aval de la hotte 30.

La partie arrière 14 du barbecue 10 comporte, outre la hotte supérieure 30, un caisson inférieur 42 qui est agencé verticalement en dessous de la hotte et au droit de cette dernière qui s'étend verticalement vers le bas, et dont la face supérieure ouverte est reliée à la face inférieure ouverte de la hotte 30.

A cet effet, le caisson inférieur 42 est de forme générale parallélépipédique rectangle et il est réalisé par découpe, pliage et soudage de tôles, notamment en acier galvanisé.

Le caisson 42 comporte ainsi une paroi verticale longitudinale arrière 44, une paroi verticale longitudinale avant 46, deux parois latérales transversales et verticales 48 et une paroi inférieure horizontale de fond 50.

Le caisson 42 se présente ainsi sous la forme d'une boîte verticale ouverte vers le haut et dont le bord périphérique supérieur 52 a des dimensions sensiblement égales à celles du bord inférieur 38 de la hotte 30.

La paroi transversale verticale de gauche 48 du caisson inférieur 42 comporte une ouverture latérale 54 qui est réalisée sous la forme d'une découpe délimitant une ouverture 54 de contour ici rectangulaire.

L'ouverture latérale 54, qui permet l'évacuation du flux des effluents de cuisson hors du caisson 42 est reliée à un premier tuyau externe 56 d'évacuation qui s'étend ici verticalement vers le haut qui est illustré en silhouette à la figure 1 et dont l'extrémité inférieure est reliée à l'ouverture latérale 54 par un dispositif d'aspiration 60 qui sera décrit plus en détails par la suite.

De manière à garantir que la totalité du flux des effluents de cuisson qui a été aspirée par la hotte 30 passe par le conduit interne d'évacuation 62, verticalement de haut en bas, la face supérieure ou embouchure supérieure 64 du conduit 62 est reliée à la face inférieure ouverte 38 de la hotte 30 par un raccord 66, aussi appelé plénum, de forme générale tronconique.

Le plénum ou raccord 66, qui est aussi réalisé par découpe, pliage et soudage de tôles, comporte notamment deux parois longitudinales inclinées 68 et deux parois verticales et longitudinales avant et arrière 70.

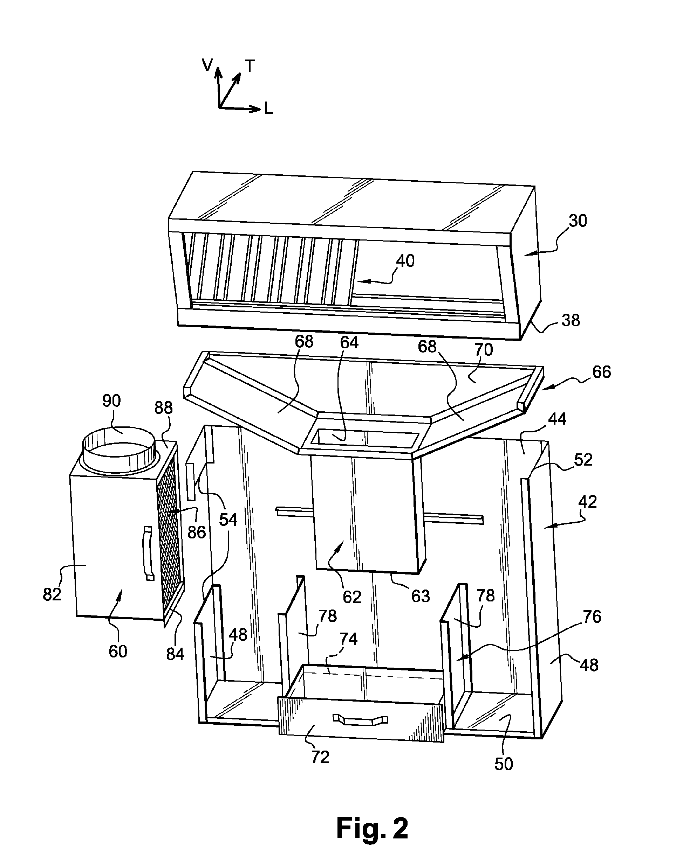

Ainsi, comme on peut le voir notamment aux figures 2 et 3, le conduit interne d'évacuation 62 est centré à l'intérieur du caisson inférieur 42, et la totalité du flux sortant de la hotte 30 par sa face inférieure ouverte 38 est guidée verticalement de haut en bas à l'intérieur du conduit 62.

Le conduit interne 62 est délimité verticalement vers le bas par son bord inférieur 63 qui constitue la face inférieure ouverte du conduit interne 62 qui débouche, conformément à l'invention, verticalement vers le bas en regard d'un bac inférieur à eau 72.

Le bac à eau 72 est ici réalisé sous la forme d'un tiroir extractible horizontalement d'arrière en avant hors du caisson 42.

Le bac à eau 72 est rempli d'eau qui atteint un niveau 74 qui délimite ainsi une surface libre d'eau en regard de l'ouverture inférieure 63 du conduit interne 62.

Ainsi, conformément à l'invention, lorsque des escarbilles et/ou des braises incandescentes pénètrent dans le caisson inférieur 42 par le conduit 62, elles atteignent avec le flux d'air aspiré portant l'ensemble des rejets de cuisson, la surface libre 74 de l'eau contenue dans le bac à eau 72, ce qui provoque leur extinction immédiate.

Ce phénomène de chute des braises et escarbilles est provoqué, d'une part, par leur poids et donc par la gravité, ainsi que par l'effet d'entraînement vertical du flux d'air aspiré qui suit l'orientation verticale du conduit interne 62.

Après avoir atteint la surface de l'eau 74, le flux pénètre à l'intérieur du caisson interne 42.

Afin de faciliter l'ensemble des phénomènes d'écoulement et d'aspiration de ce flux, selon une autre caractéristique de l'invention, le caisson inférieur 42 est muni d'une cheminée verticale interne 76 qui entoure le conduit interne 62 verticalement de bas en haut sur une partie de sa hauteur.

La cheminée interne 76 est ici de forme parallélépipédique rectangle complémentaire de celle du conduit interne 62 et elle est constituée essentiellement par deux parois transversales verticales 78 qui s'étendent sur toute la largeur transversale du caisson inférieur 42 et qui, avec les parties correspondantes des parois avant 46 et arrière 44 du caisson 42, constituent la cheminée verticale 76 qui entoure le conduit interne 62.

Ainsi, la cheminée 76 délimite avec le conduit interne 62 un passage ou canal annulaire 80 de section réduite qui débouche verticalement vers le haut dans le caisson inférieur 42 pour l'évacuation du flux des rejets de cuisson après leur passage sur le bac à eau 72.

Ensuite, le flux des rejets de cuisson est aspiré à travers l'orifice latéral 54 par le dispositif d'aspiration 60.

Le dispositif d'aspiration 60 est du type à circulation d'air forcée.

Il se présente ici sous la forme d'une boîte latérale externe 60 qui est fixée sur la paroi latérale de gauche 48 du caisson inférieur 42.

La boîte d'aspiration 60 est de forme parallélépipédique rectangle complète et elle est fermée, à sa face longitudinale avant, par une plaque 82.

La boîte d'aspiration 60 comporte une face verticale latérale de droite 84 qui est ouverte et qui communique avec l'orifice latéral 54.

Un filtre à graisses extractible 86, aussi appelé filtre à tricot en acier inoxydable, est agencé à l'interface de l'orifice latérale 54 et de la boîte d'aspiration forcée 60.

Le filtre 86 en forme de grille est ici d'orientation transversale et verticale et il est accessible depuis l'extérieur, pour pouvoir être extrait horizontalement d'arrière en avant notamment pour être nettoyé et/ou changé.

Le filtre 86 réalise une filtration supplémentaire des graisses et des gouttelettes et il constitue aussi une protection supplémentaire au cas où quelques rares braises et/ou escarbilles incandescentes auraient franchi le barrage d'extinction constitué par le bac à eau 72.

A sa partie supérieure, la paroi horizontale supérieure 88 de la boîte d'aspiration 82 est munie d'un raccord annulaire cylindrique 90 auquel est reliée l'extrémité inférieure 58 du tuyau vertical externe d'évacuation 56.

Pour l'aspiration par circulation forcée d'air, le barbecue 10 est muni d'un moto-ventilateur (non représenté) qui est de préférence intégré à la boîte d'aspiration 60.

Il peut par exemple s'agir d'un ventilateur à moteur à rotor extérieur présentant de très bonnes capacités de refroidissement du fait que le moteur est situé dans le circuit d'air.

Le moto-ventilateur peut aussi, à titre de variante, être installé plus loin en aval de la boîte 60.

Selon encore une autre variante, le moto-ventilateur peut être agencé à l'intérieur du caisson inférieur 42 au droit de l'orifice latéral 54.

Outre l'avantage inhérent à la protection contre les risques d'incendies accidentels, la conception selon l'invention permet une modification aisée des barbecues existants dans la mesure où l'ensemble des moyens nouveaux sont agencés essentiellement dans le caisson inférieur 42, sans en modifier, ni la conception générale, ni les dimensions.

De plus, les composants supplémentaires tels que notamment le conduit interne 62 et son raccord 66 sont extractibles vers le haut pour faciliter l'ensemble des opérations de démontage et d'entretien qui sont régulières et obligatoires pour ce type d'installation.

Grâce au conduit 62 et à l'espace annulaire 80, on a obtenu une augmentation de la vitesse de circulation de l'air en aval du premier filtre à choc 40 de manière à favoriser la projection verticale vers le bas des braises et escarbilles.

L'altitude ou cote verticale de la face inférieure ouverte 63 soit proche du bac à eau à un niveau correspondant à un "équilibre" ou compromis entre la capture ou piégeage optimal des braises et escarbilles incandescentes et le débit de l'air évacué par le canal annulaire 80 pour éviter un phénomène d'obstruction d'air trop proche de la surface de l'eau (ou la perte de charge du flux d'air).

Selon une variante non représentée, il est possible de faire passer entièrement le flux d'air avec les rejets de cuisson dans l'eau contenue dans le bac 72.

A cet effet, il faut prévoir une longueur verticale suffisante du conduit 62 de manière que sa face inférieure ouverte 63 « trempe » en permanence dans le bac à eau.

On peut prévoir un système de circulation d'air forcée beaucoup plus puissant. Afin d'éviter la projection des cendres et escarbilles dans le canal annulaire 80, l'aire ou section de passage du canal 80 doit être beaucoup plus importante dans le but de faciliter d'une part la capture des cendres et escarbilles dans le bac à eau et, d'autre part, l'évacuation du flux d'air dans le canal 80 à faible vitesse par le phénomène de détente. Cela permet d'assurer alors une plus grande étanchéité de tous les composants du caisson inférieur. L'aire de passage du canal 80 est par exemple égale à environ trois fois l'aire de passage du conduit 62.

Lorsque le bac à eau est réalisé sous la forme d'un tiroir 72, il peut être rempli régulièrement en extrayant le bac et en le remplissant.

Si le bac à eau est fixe, on peut aussi prévoir des moyens de remplissage, non représentés, par une conduite d'eau, ainsi qu'une conduite d'évacuation de l'eau contenue dans le bac.

Les essais effectués ont montré une quasi absence de braises ou d'escarbilles incandescentes en aval du dispositif de ventilation, c'est-à-dire en aval de l'orifice latéral 54, et ceci même lorsque le barbecue est utilisé dans les conditions les plus défavorables, comme cela est notamment le cas lorsque, lors de l'allumage du foyer, le cuisinier tisonne le combustible contenu dans le foyer et/ou facilite le démarrage de la combustion au moyen d'un ventilateur, ce qui produit alors une grande quantité de braises et d'escarbilles « volantes ».

## Revendications

1. Barbecue (10), notamment à charbon de bois, pour la restauration collective comportant :
- un bac de chauffage (18) formant foyer présentant une face supérieure ouverte vers le haut et qui loge du charbon de bois;
- une grille horizontale (28) de cuisson qui recouvre au moins en partie la face supérieure ouverte du bac de chauffage (18) ;
- une hotte supérieure (30) d'aspiration des rejets de cuisson;
- un caisson inférieur (42) agencé en dessous de la hotte (30), qui s'étend verticalement vers le bas et dont la face supérieure (52) est ouverte et est reliée à la hotte (30) ;
- et un tuyau externe (56) d'évacuation dont une extrémité inférieure (58) est reliée à une ouverture latérale (54) formée dans le caisson inférieur (42),
**caractérisé en ce qu'**il comporte :
- un bac inférieur (72) à eau rempli d'eau qui est agencé en partie basse du caisson inférieur (42) et dont la face supérieure est ouverte;
- et un conduit interne (62) d'évacuation qui est relié au caisson inférieur et dont l'extrémité inférieure (63) débouche au-dessus et en regard de la surface de l'eau contenue dans le bac inférieur (72), de manière à guider le flux des rejets de cuisson en direction de la surface de l'eau.

2. Barbecue (10) selon la revendication 1, **caractérisé en ce que** :
- la hotte supérieure (30) est une boîte agencée au-dessus du plan de la grille de cuisson (28) et en arrière du bord longitudinal arrière supérieur du bac de chauffage (18), qui comporte une face verticale avant ouverte d'entrée pour l'aspiration des rejets de cuisson et une face inférieure de sortie (38) ouverte vers le bas pour la récupération des rejets aspirés;
- la face supérieure ouverte (52) du caisson inférieur (42) est reliée à la face inférieure ouverte (38) de la hotte (30) ;
- le un conduit interne (62) d'évacuation est relié à la face supérieure ouverte du caisson inférieur.

3. Barbecue selon la revendication précédente, **caractérisé en ce que** ledit conduit interne (62) est un conduit vertical cylindrique dont l'embouchure supérieure (64) est reliée à la face supérieure ouverte du caisson inférieure par un raccord continu (66), de manière à faire passer la totalité du flux des rejets de cuisson par le conduit interne (62) d'évacuation.

4. Barbecue selon la revendication précédente, **caractérisé en ce qu'**il comporte une cheminée interne (76) qui entoure le bac à eau, qui s'étend depuis le fond du caisson inférieur, et qui entoure le conduit interne sur une partie de sa hauteur et qui délimite avec ce dernier un canal de passage de section réduite, qui débouche vers le haut dans le caisson inférieur (42) pour l'évacuation du flux des rejets de cuisson après leur passage à la surface de l'eau.

5. Barbecue selon l'une quelconque des revendications précédentes, **caractérisé en ce qu'**il comporte un dispositif (60) d'aspiration à circulation d'air forcée qui est relié à ladite ouverture latérale (54) formée dans une paroi latérale (48) du caisson inférieur (42).

6. Barbecue selon la revendication précédente, **caractérisé en ce que** le dispositif d'aspiration comporte une boîte latérale externe d'aspiration (60) qui est fixée sur ladite paroi latérale (48) du caisson inférieur, dont un orifice d'entrée (84) est relié à ladite ouverture latérale (54) et dont un orifice haut (90) de sortie est relié à ladite extrémité inférieure (58) du tuyau d'évacuation (56).

7. Barbecue selon la revendication 1, **caractérisé en ce que** le bac à eau (72) est réalisé sous la forme d'un tiroir extractible horizontalement hors du caisson inférieur (42).

8. Barbecue selon la revendication 1, **caractérisé en ce qu'**il comporte un filtre à choc (40) qui est agencé dans la hotte supérieure (30) et qui est incliné de bas en haut et d'avant en arrière.

9. Barbecue selon la revendication 6, **caractérisé en ce qu'**il comporte au moins un premier filtre à graisse (86) qui est agencé en aval de la sortie du canal de passage (80) et en amont de l'orifice d'entrée (86) de la boîte latérale d'aspiration (60).
